# EUROPEAN PATENT SPECIFICATION

(11) **EP 1 145 815 B1**
(45) Date of publication and mention of the grant of the patent: **12.05.2004**
(21) Application number: 01500094.6
(22) Date of filing: 04.04.2001
(51) Int. Cl.: B29C 44/02, C08J 9/06, B65D 39/00

(54) **A method of manufacturing stoppers for bottles and stoppers manufactured by the method**
Verfahren zum Herstellen von Flaschenstopfen und nach diesem Verfahren hergestellte Flaschenstopfen
Procédé de fabrication de bouchons de bouteilles et bouchons ainsi obtenus

(30) Priority: 06.04.2000 ES 200000867; 31.01.2001 ES 200100217
(43) Date of publication of application: 17.10.2001
(73) Proprietor: Ortiz Aycart, Eduardo, 08950 Esplugues de Llobregat (Barcelona) (ES); Marti Sarda, Francisco, 08950 Esplugues de Llobregat (Barcelona) (ES)
(72) Inventor: Ortiz Aycart, Eduardo, 08950 Esplugues de Llobregat (Barcelona) (ES); Marti Sarda, Francisco, 08950 Esplugues de Llobregat (Barcelona) (ES)
(74) Representative: Duran Moya, Carlos

(56) References cited:
- EP-A- 0 051 523
- EP-A- 0 097 783
- WO-A-00/26103
- WO-A-98/47783
- US-A- 4 091 136
- US-A- 4 188 457
- US-A- 4 499 141
- US-A- 5 855 287

## Description

The present invention is intended to disclose a method with original and advantageous characteristics for the manufacture of stoppers for the closure of bottles, and also refers to the stoppers produced by the application of the method.

At the moment, bottles of wines, sparkling wines, and the like are corked by means of natural or agglomerated cork stoppers in accordance with production methods conventional in this industry.

Natural and agglomerated cork stoppers have many disadvantages, apart from their high cost price given the increasing scarcity of the raw material of which they are made. Amongst these disadvantages may be mentioned:
- the emission of particles at the moment when the stopper is compressed upon it is inserted in the bottle, with possible contamination of the drink;
- The existence of residues of chemical products used in the surface treatment of cork stoppers, such as bleaches etc., which may lead to changes in the odour and flavour of the contents of the bottles, that is, organoleptic changes in the product;
- The need for a predetermined degree of humidity to achieve the pressure values and closure of the bottles;
- The considerable resilient-recovery time of the stopper which necessitates an appreciable waiting time in the subsequent handling of the bottles,
- The appearance of mould and the possibility of Coleoptera and Microlepidoptera eggs being laid during storage of the bottles;
- The existence of burrows excavated by ants and/or larvae, which present the danger of leakage of the bottles and the entry of oxygen;
- The generation of cork dust at the handling stage during the bottling process.

U.S. Patent 4,188,457 refers to closures for liquid product containers injection moulded from ethylene-vinyl acetate copolymer (EVA) with the addition of sodium metabisulphite and sodium bicarbonate.

U.S. Patent 5,855,287 discloses a moulded closure for a liquid container comprising a thermoplastic elastomer made out a styrene block copolymer and at least about 3% of a blowing agent.

WO 00/26103 discloses a synthetic closure for bottle like containers with a thermoplastic elastomer and a metallocene catalysed ethylene-α-olephin copolymer.

WO-A-9 847 783 discloses stoppers for the closure of bottles consisting of closed cell thermoplastic material and their method of manufacturing by extrusion.

The present invention in accordance with claims 1 and 7 is intended to overcome the above-mentioned disadvantages, and provides stoppers in which characteristics of very quick recovery, good operation of the stopper irrespective of humidity, and firm adhesion of the stopper to the bottle are achieved, preventing, in general, any type of contamination of the product contained in the bottle.

Moreover, the stoppers of the present invention are fully recyclable, and present neither problems of use for other applications after their initial use, nor ecological problems in their eventual disposal.

Moreover, the stoppers produced by the present method have less resistance to compression than conventional cork so that less mechanical effort will be required by the jaws for compressing the stopper before insertion.

Furthermore, there will be no leaktightness defects and, given the structure of the stopper, it will be very easy to comply with the corresponding official norms.

The method of the present invention is based on the use of a first raw material which consists preferably of ester-based polyurethane with a melting point of about 220°C that has received the following additives, mixed uniformly and homogeneously:
- azodicarbonamide 3 - 6 wt.%
- sodium bicarbonate 1 - 6 wt.%
- tartaric acid 5 - 11 wt.%
- citric acid 6 - 12 wt.%
- carboxylic acid and salts thereof 5 - 9 wt.%
- humectant 1 - 4 wt.%
- colorant 1 - 2 wt.%

The colorants are intended to achieve the colour of wood or cork according to the customer's wishes.

The invention provides for other raw materials such as polyethylene, octene-based linear polyethylene, ethylene-vinyl-acetate (EVA) copolymer, or a polydimethyl-siloxane-based silicone, all with the same additives mentioned.

Once the raw material has been made up, its transformation is performed on the basis of injection or extrusion, the raw material previously being melted at the temperatures appropriate for the raw material used, at which time the gas-producing endothermic reaction of the additives will take place, the raw material being introduced, in the case of the injection method, into stopper-shaped moulds or, in the extrusion method, into a die to produce a continuous stopper profile which subsequently will have to be cut, to form the closed-cell structure necessary to achieve the required mechanical and aesthetic properties in the stoppers.

## Claims

1. A method of manufacturing stoppers for bottles comprising the production of a raw material consisting of a thermoplastic material with the following additives:
- azodicarbonamide 3 - 6 wt.%
- sodium bicarbonate 1 - 6 wt.%
- tartaric acid 5 - 11 wt.%
- citric acid 6 - 12 wt.%
- carboxylic acid and salts thereof 5 - 9 wt.%
- humectant 1 - 4 wt.%
- colorant 1 - 2 wt.%
the raw material being heated to generate gases for the production of closed cells, being subsequently melted and injected into a stopper-shaped mould or extruded through a die to produce a profile to permit production of the stoppers by cutting.

2. A method of manufacturing stoppers for bottles according to Claim 1, wherein the thermoplastic material is constituted by a polyethylene.

3. A method of manufacturing stoppers for bottles according to Claim 2, wherein the polyethylene is an octene-based linear polyethylene.

4. A method of manufacturing stoppers for bottles according to Claim 1, wherein the thermoplastic material is an ethylene-vinyl-acetate copolymer.

5. A method of manufacturing stoppers for bottles according to Claim 1, wherein the thermoplastic material is a polydimethyl-siloxane-based silicone.

6. A method of manufacturing stoppers for bottles according to Claim 1, wherein the plastics material is an ester-based thermoplastic polyurethane with a melting point of 220°C.

7. Stoppers for the closure of bottles, said stoppers consisting of closed celled thermoplastic material containing 1 - 4 wt.-% humectant, 1 - 2 wt.-% colorant and the remnants of 3 - 6 wt.-% azodicarbonamide, 1 - 6 wt.-% sodium bicarbonate, 5 - 11 wt.-% tartaric acid, 6 - 12 wt.-% citric acid and 5 - 9 wt.-% carboxylic acid and salts thereof.

## Patentansprüche

1. Verfahren zur Herstellung von Stopfen für Flaschen, aufweisend die Erzeugung eines Rohmaterials, das aus einem thermoplastischen Material mit den folgenden Zusätzen:
- Azodicarbonamid 3 - 6 Gew.-%
- Natriumbicarbonat 1 - 6 Gew.-%
- Weinsäure 5 - 11 Gew.-%
- Zitronensäure 6 - 12 Gew.-%
- Carbonsäure und Salze davon 5 - 9 Gew.-%
- Benetzungsmittel 1 - 4 Gew.-%
- Farbstoff 1 - 2 Gew.-%
besteht, wobei das Rohmaterial erhitzt wird, um Gase für die Bildung geschlossener Zellen zu erzeugen, nachfolgend geschmolzen wird und in eine stopfenförmige Form injiziert oder zur Erzeugung eines Profils durch ein Mundstück extrudiert wird, um die Erzeugung der Stopfen durch Schneiden zu erlauben.

2. Verfahren zur Herstellung von Stopfen für Flaschen nach Anspruch 1, bei dem das thermoplastische Material aus einem Polyethylen besteht.

3. Verfahren zur Herstellung von Stopfen für Flaschen nach Anspruch 2, bei dem das Polyethylen ein lineares Polyethylen auf der Basis von Octen ist.

4. Verfahren zur Herstellung von Stopfen für Flaschen nach Anspruch 1, bei dem das thermoplastische Material ein Ethylen-Vinylacetat-Copolymer ist.

5. Verfahren zur Herstellung von Stopfen für Flaschen nach Anspruch 1, bei dem das thermoplastische Material ein Silikon auf Polydimethyl-siloxan-Basis ist.

6. Verfahren zur Herstellung von Stopfen für Flaschen nach Anspruch 1, bei dem das Kunststoffmaterial ein thermoplastisches Polyurethan auf Ester―Basis mit einem Schmelzpunkt von 220°C ist.

7. Stopfen zum Verschließen von Flaschen, wobei die Stopfen aus geschlossenporigem thermoplastischen Material bestehen, das 1 - 4 Gew.-% Benetzungsmittel, 1 - 2 Gew.-% Farbstoff und die Überreste von 3 - 6 Gew.-% Azodicarbonamid, 1 - 6 Gew.-% Natriumbicarbonat, 5 - 11 Gew.-% Weinsäure, 6 - 12 Gew.-% Zitronensäure und 5 - 9 Gew.-% Carbonsäure und Salzen davon enthält.

## Revendications

1. Procédé pour la fabrication de bouchons de bouteilles comprenant la production d'une matière brute consistant en un matériau thermoplastique avec les additifs suivants :
- 3-6 % en poids d'azidocarbonamide
- 1-6 % en poids de bicarbonate de sodium
- 5-11 % en poids d'acide tartrique
- 6-12 % en poids d'acide citrique
- 5-9 % en poids d'acide carboxylique et ses sels
- 1-4 % en poids d'agent humidifiant
- 1-2 % en poids de colorant
la matière brute étant chauffée afin de générer des gaz pour la production d'alvéoles fermées, et consécutivement fusionnée et injectée dans un moule en forme de bouchon ou extrudée à travers une matrice pour produire un profilé permettant la production des bouchons par découpe.

2. Procédé pour la fabrication de bouchons pour des bouteilles selon la revendication 1, dans lequel le matériau thermoplastique est constitué par un polyéthylène.

3. Procédé pour la fabrication de bouchons pour des bouteilles selon la revendication 2, dans lequel le polyéthylène est un polyéthylène linéaire à base d'octène.

4. Procédé pour la fabrication de bouchons pour des bouteilles selon la revendication 1, dans lequel le matériau thermoplastique est un copolymère d'acétate d'éthylène - vinyle.

5. Procédé pour la fabrication de bouchons pour des bouteilles selon la revendication 1, dans lequel le matériau thermoplastique est une silicone à base de polydiméthyl-siloxane.

6. Procédé pour la fabrication de bonchons pour des bouteilles selon la revendication 1, dans lequel le matériau plastique est un polyuréthane thermoplastique à base d'ester avec un point de fusion de 220°C.

7. Bouchons pour la fermeture de bouteilles, lesdits bouchons consistant en un matériau thermoplastique à alvéoles fermées contenant 1-4% en poids d'agent humidifiant, 1-2% en poids de colorant et les restes de 3-6% en poids d'azodicarbonamide, 1-6% en poids de bicarbonate de sodium, 5-11%en poids d'acide tartrique, 6-12% en poids d'acide citrique et 5-9%en poids d'acide carboxylique et leurs sels.
